# EUROPEAN PATENT APPLICATION

(11) **EP 4 709 042 A1**
(43) Date of publication of application: **11.03.2026**
(21) Application number: 24919560.3
(22) Date of filing: 19.04.2024
(51) Int. Cl.: H05B 3/34, H05B 3/14, H05B 3/40, A47J 37/06, C01B 32/21, C01B 32/225, C01B 32/194

(54) **HEATING FILM AND PREPARATION METHOD THEREFOR, HEATING TUBE, AND HEATING APPLIANCE**

(30) Priority: 26.01.2024 CN 202410119728
(71) Applicant: Guangdong Midea Kitchen Appliances Manufacturing Co., Ltd., Foshan, Guangdong 528311 (CN)
(72) Inventor: RAO, Jie, Foshan, Guangdong 528311 (CN); SUN, Yanjun, Foshan, Guangdong 528311 (CN); ZHANG, Zehui, Foshan, Guangdong 528311 (CN); ZHAO, Wenhua, Foshan, Guangdong 528311 (CN); WANG, Cong, Foshan, Guangdong 528311 (CN)
(74) Representative: RGTH
(86) International application number: PCT/CN2024/088968
(87) International publication number: WO 2025/156470

(57) **Abstract**

Provided are a heating film, a method for preparing the heating film, a heating element, and a heating appliance. A raw material for the heating film includes natural graphite and/or graphene. The heating film satisfies at least one of the following conditions: the heating film has a thickness ranging from 0.04 mm to 2 mm; and the heating film has a density ranging from 0.6 g/cm³ to 1.8 g/cm³.

## Description

### CROSS-REFERENCE TO RELATED APPLICATION

This application claims priority to and benefits of Chinese patent application No. 202410119728.X, filed on January 26, 2024, the entire content of which is incorporated herein by reference.

### FIELD

The present disclosure relates to the technical field of appliance, and more particularly, to a heating film, a method for preparing the heating film, a heating pipe, and a heating appliance.

### BACKGROUND

Conventional electric ovens heat the food mainly through heating the air in a chamber by heating pipes, and heat a surface of the food directly through heat radiation. At present, main heating components used in heating appliances existing on the market, such as electric ovens, microwave ovens, and combi steam ovens, comprise heating pipes such as metallic heating pipes (having a highest heating temperature range between 550°C and 750°C), quartz heating pipes (a heating wire of which has a heating temperature range between 660°C and 800°C), halogen heating pipes (having a highest heating temperature smaller than 1,000°C), and carbon fiber heating pipes (having a highest heating temperature smaller than 1,000°C). However, the above-mention ed heating pipes face problems such as low temperature rise rate within the heating temperature range, insufficient heating speed, and insufficiently high temperature, which may prolong cooking time. Thus, the effect of crispy outside and tender inside of the food can hardly be reached during the heating, thereby resulting in unsatisfactory user experience. Moreover, conventional heating pipes offer a limited range for power adjustment, which further limits an application range of the conventional heating pipes.

### SUMMARY

The present disclosure aims to solve at least one of the technical problems in the related art to some extent. Therefore, an objective of the present disclosure is to provide a heating film, which has advantages such as high heating temperature, fast heating speed, and high temperature rise rate.

In an aspect, the present disclosure provides a heating film. According to embodiments of the present disclosure, a raw material for the heating film comprises natural graphite and/or graphene. The heating film satisfies at least one of the following conditions: the heating film has a thickness ranging from 0.04 mm to 2 mm; and the heating film has a density ranging from 0.6 g/cm³ to 1.8 g/cm³. Since the heating film of graphite is prepared using the natural graphite or the graphene, the heating film has a high heating temperature and a high heating rate, which are conducive to reaching a higher temperature of heating and a higher heating efficiency. In addition, the heating film of the present disclosure is made of natural graphite, a mine of which takes a great proportion among global mineral resources. Further, a material of a carbon-based film does not require high-temperature graphitization in a preparation process, and it is obtainable without other processes of preparation and can be manufactured in a continuous manner, which reduce costs. On the whole, the material of the carbon-based film has advantages such as a wide range of raw material sources, simple preparation process, good product stability, on-demand adjustment of performance parameters, and ease of adjustment. These advantages confer significant benefits in terms of reducing product costs, enhancing product reliability, diversifying product lines, and the like. If artificial graphite is used, a process flow of manufacturing the artificial graphite is required to be set up, which greatly increases manufacturing costs and manufacturing time of the heating film and reduces a manufacturing efficiency. The graphene, when used as the raw material, is not only conducive to obtaining the heating film with a high carbon content, but also benefits from a simple and mature processing process, which keeps the manufacturing costs at a modest level. Further, when the above conditions are satisfied, the heating film can meet requirements of a wide range power, in such a manner that the heating film can have relatively high power and efficiency. In addition, the heating film satisfying the above conditions has satisfactory manufacturability, i.e., high production yield. Also, service life of the heating film can meet use requirements.

According to an embodiment of the present disclosure, the heating film has a carbon content greater than or equal to 99%.

According to an embodiment of the present disclosure, the heating film has power ranging from 15 W to 10,000 W.

According to an embodiment of the present disclosure, the heating film satisfies at least one of the following conditions: the heating film has a length ranging from 250 mm to 450 mm, a width ranging from 6 mm to 10 mm, the density ranging from 1.2 g/cm³ to 1.8 g/cm³, and the power ranging from 30 W to 5,000 W; the heating film has the length ranging from 450 mm to 650 mm, the width ranging from 6 mm to 10 mm, the density ranging from 1.2 g/cm³ to 1.8 g/cm³, and the power ranging from 25 W to 10,000 W; the heating film has the length ranging from 250 mm to 450 mm, the width ranging from 6 mm to 10 mm, the density ranging from 0.6 g/cm³ to 1.2 g/cm³, and the power ranging from 10 W to 3,400 W; and the heating film has the length ranging from 450 mm to 650 mm, the width ranging from 6 mm to 10 mm, the density ranging from 0.6 g/cm³ to 1.2 g/cm³, and the power ranging from 10 W to 7,000 W.

According to an embodiment of the present disclosure, the heating film has a flake-like structure; the natural graphite and the graphene has a flake-like structure; and a flake-like extension plane of the heating film is substantially consistent with a flake-like extension plane of the natural graphite and/or a flake-like extension plane of the graphene.

According to an embodiment of the present disclosure, the heating film has a heating temperature ranging from 500°C to 1,700°C.

According to an embodiment of the present disclosure, a material of the heating film is graphite.

According to an embodiment of the present disclosure, the heating film comprises a plurality of heating units arranged sequentially in a length direction; and two adjacent heating units are arranged at an interval from each other and connected through a connection segment.

According to an embodiment of the present disclosure, each of the plurality of heating units has a hollow hole.

According to an embodiment of the present disclosure, the heating film has a first heating segment and a second heating segment that are adjacent to each other in the length direction. The first heating segment comprises multiple heating units connected to each other, and the second heating segment comprises multiple heating units adjacent to each other, heating unit corresponding to the first heating segment having a smaller size than heating unit corresponding to the second heating segment; and/or the first heating segment and the second heating segment are offset from each other in a width direction of the heating film.

According to an embodiment of the present disclosure, the heating film has a plurality of notches arranged at an interval in the length direction.

According to an embodiment of the present disclosure, each of the plurality of notches is defined through separating a part of the heating film from the remaining part of the heating film and then bending the part of the heating film.

In another aspect, the present disclosure provides a method for preparing the heating film described above. According to an embodiment of the present disclosure, the method for preparing the heating film comprises: providing natural graphite, and performing an intercalation treatment on the natural graphite to obtain expandable graphite; performing an expansion treatment on the expandable graphite to obtain expanded graphite; and performing calendering, a first heat treatment, and cutting on the expanded graphite to obtain the heating film. Alternatively, the method for preparing the heating film comprises: uniformly mixing and dispersing graphene and an additive to obtain a dispersion; obtaining a dispersion film by coating the dispersion; performing a second heat treatment on the dispersion film to obtain a preliminary carbon-based film; and performing calendering and cutting on the preliminary carbon-based film to obtain the heating film. Since the heating film of graphite is prepared using the natural graphite or the graphene, the heating film has a high heating temperature and a high heating rate, which are conducive to reaching a higher temperature of heating and a higher heating efficiency. In addition, the heating film of the present disclosure is made of natural graphite, a mine of which takes a great proportion among global mineral resources. In the meantime, a material of a carbon-based film does not require high-temperature graphitization in a preparation process, and it is obtainable without other processes of preparation and can be manufactured in a continuous manner, which reduce costs. On the whole, the material of the carbon-based film has advantages such as a wide range of raw material sources, simple preparation process, good product stability, on-demand adjustment of performance parameters, and ease of adjustment. These advantages confer significant benefits in terms of reducing product costs, enhancing product reliability, diversifying product lines, and the like. If artificial graphite is used, a process flow of manufacturing the artificial graphite is required to be set up, which greatly increases manufacturing costs and manufacturing time of the heating film and reduces a manufacturing efficiency. The graphene, when used as the raw material, is not only conducive to obtaining the heating film with a high carbon content, but also benefits from a simple and mature processing process, which keeps the manufacturing costs at a modest level.

According to an embodiment of the present disclosure, conditions of the intercalation treatment are: performing intercalation on the natural graphite using concentrated sulfuric acid and/or hydrogen peroxide, to obtain the expandable graphite; and conditions of the expansion treatment are: putting the expandable graphite into an expansion furnace, and expanding the expandable graphite at a temperature ranging from 850°C to 1,200°C, to obtain the expanded graphite.

In yet another aspect, the present disclosure provides a heating pipe. According to an embodiment of the present disclosure, the heating pipe comprises the heating film as described above. In this way, the heating pipe has a high heating temperature, a high temperature rise rate, and a relatively concentrated heating region, which greatly improves a heating efficiency of the heating pipe. It is conceivable for those skilled in the art that the heating pipe has all the features and advantages of the heating film described above, which are not described in detail herein.

In still yet another aspect, the present disclosure provides a heating appliance. According to an embodiment of the present disclosure, the heating appliance comprises the heating pipe as described above. In this way, the heating appliance has a high heating temperature, a high temperature rise rate, and a relatively concentrated heating region , which greatly improves a heating efficiency of the heating appliance.

According to an embodiment of the present disclosure, the heating appliance is an electric oven, a microwave oven, a combi steam oven, an electric kettle, an electric blanket, an electric warm air blower, an electric heater, a bath heater, an electric ceramic cooktop, or a disinfection cabinet.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic diagram of heat radiations of a heating film of the present disclosure.
FIG. 2 is a schematic diagram of heat radiations of a heating pipe core in the related art.
FIG. 3 is a schematic graph indicating a relationship between a heating temperature and resistance of a heating film of the present disclosure.
FIG. 4 is a schematic graph indicating a relationship between a thickness and resistance of a heating film of the present disclosure.
FIG. 5 illustrates schematic structural views of heating films according to embodiments of the present disclosure.
FIG. 6 illustrates schematic structural views of heating films according to some other embodiments of the present disclosure.
FIG. 7 illustrates schematic structural views of heating films according to some other embodiments of the present disclosure.
FIG. 8 is a schematic structural view of a heating pipe according to some embodiments of the present disclosure.
FIG. 9 is a schematic structural view of a heating pipe according to some embodiments of the present disclosure.
FIG. 10 is a schematic structural view of a heating pipe according to some embodiments of the present disclosure.
FIG. 11 illustrates schematic structural views of heating films according to some other embodiments of the present disclosure.

### DETAILED DESCRIPTION

Solutions of the present disclosure will be explained below with reference to examples. It is conceivable for those skilled in the art that the examples described below are intended to explain the present disclosure, but should not be construed as limiting the scope of the present disclosure. Where specific techniques or conditions are not indicated in the examples, the procedures shall be carried out in accordance with the techniques or conditions described in the literature in the field or in accordance with the product specification. The reagents or instruments used without the indication of the manufacturers are all conventional products that can be purchased commercially.

The present disclosure is described below with reference to specific examples. It should be noted that these examples are merely descriptive and do not limit the present disclosure in any way.

In an aspect, the present disclosure provides a heating film. According to an embodiment of the present disclosure, a raw material for the heating film comprises natural graphite and/or graphene. The heating film satisfies at least one of the following conditions: the heating film has a thickness ranging from 0.04 mm to 2 mm, e.g., 0.04 mm, 0.08 mm, 0.1 mm, 0.2 mm, 0.5 mm, 0.8 mm, 1.0 mm, 1.2 mm, 1.5 mm, 1.8 mm, and 2.0 mm, etc.; and the heating film has a density ranging from 0.6 g/cm³ to 1.8 g/cm³, e.g., 0.6 g/cm³, 0.8 g/cm³, 1.0 g/cm³, 1.2 g/cm³, 1.4 g/cm³, 1.5 g/cm³, 1.6 g/cm³, and 1.8 g/cm³, etc. Since the heating film of graphite is prepared using the natural graphite or the graphene, the heating film has a high heating temperature and a high heating rate, which are conducive to reaching a higher temperature of heating and a higher heating efficiency. In addition, the heating film of the present disclosure is made of natural graphite, a mine of which takes a great proportion among global mineral resources. Further, a material of a carbon-based film does not require high-temperature graphitization in a preparation process, and it is obtainable without other processes of preparation and can be manufactured in a continuous manner, which reduce costs. On the whole, the material of the carbon-based film has advantages such as a wide range of raw material sources, simple preparation process, good product stability, on-demand adjustment of performance parameters, and ease of adjustment. These advantages confer significant benefits in terms of reducing product costs, enhancing product reliability, diversifying product lines, and the like. If artificial graphite is used, a process flow of manufacturing the artificial graphite is required to be set up, which greatly increases manufacturing costs and manufacturing time of the heating film and reduces a manufacturing efficiency. The graphene, when used as the raw material, is not only conducive to obtaining the heating film with a high carbon content, but also benefits from a simple and mature processing process, which keeps the manufacturing costs at a modest level. Further, when the above conditions are satisfied, the heating film can meet requirements of a wide range power, in such a manner that the heating film can have relatively high power and efficiency. In addition, the heating film satisfying the above conditions has satisfactory manufacturability, i.e., high production yield. Also, service life of the heating film can meet use requirements.

In some embodiments of the present disclosure, the raw material graphene may be graphene nanoplatelets, which refer to ultra-thin layered graphene stacks with more than 10 carbon layers and having a thickness ranging from 5 nanometers to 100 nanometers. Graphene nanoplatelets have satisfactory thermal conductivity and tensile strength, which in turn help to increase the heating temperature and improve mechanical strength of the prepared heating film.

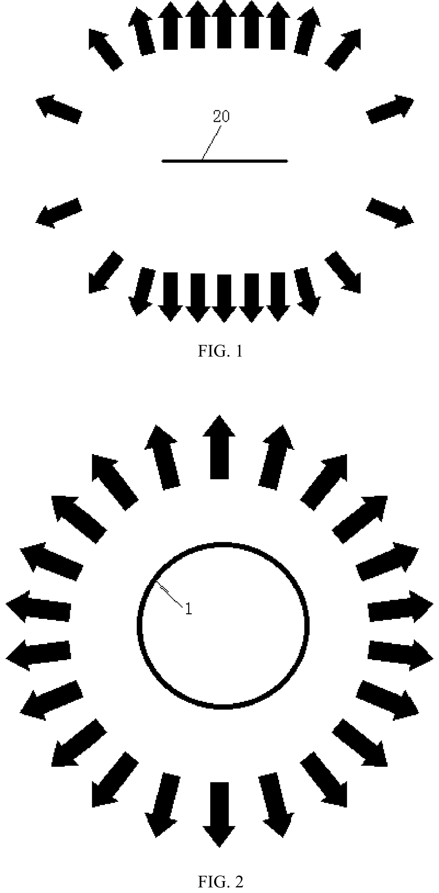

According to some embodiments of the present disclosure, the heating film has a flake-like structure. The raw material, natural graphite and/or graphene, for preparing the heating film has a flake-like structure. A flake-like extension plane of the heating film is substantially consistent with a flake-like extension plane of the natural graphite and/or a flake-like extension plane of the graphene. Therefore, as illustrated in FIG. 1, when a heating film 20 having a flake-like structure generates heat, the heat is mainly radiated out in a direction perpendicular to a heat generation surface (i.e., a plane of the film), which provides strong directivity and concentrated radiation heat. Therefore, a heating efficiency can be better improved to reduce a heat loss. In the related art, as illustrated in FIG. 2, heat radiations are emitted from a heating pipe core 1 (such as a metallic heating pipe core or a quartz pipe core) uniformly in all directions, and thus the heat cannot be emitted concentratedly, which often results in a waste of heat and reduces a heating efficiency. The above comparison indicates that directions of the heat radiations of the heating film of the present disclosure are more concentrated, which allows a to-be-heated object to be heated in a more targeted manner, improving the heating efficiency. It should be noted that the above-mentioned expression "substantially consistent with" means that the flake-like extension plane of the heating film is only required to be roughly consistent with the flake-like extension plane of the graphite and/or the flake-like extension plane of the graphene, instead of that flake-like extension plane of the heating film is required to be completely consistent with or completely parallel to the flake-like extension plane of the graphite and/or the flake-like extension plane of the graphene.

According to some embodiments of the present disclosure, as described above, since a material of the heating film prepared from the raw material natural graphite and/or graphene is graphite, the heating film of the present disclosure has a high heating temperature and a high heating rate. The prepared graphite still has a flake-like structure. A plane extension direction of the flake-like structure is substantially the same as that of the raw material natural graphite or graphene. That is, the flake-like extension plane of the heating film is substantially the same as that of the graphite used for preparing the heating pipe.

According to some embodiments of the present disclosure, the heating film has a carbon content greater than or equal to 99%. In this way, the heating film has a high carbon content, i.e., high purity, which is conducive to obtaining the heating film with better performances.

According to some embodiments of the present disclosure, the heating film has a power ranging from 15 W to 10,000 W, e.g., 15 W, 20 W, 40 W, 50 W, 70 W, 100 W, 150 W, 300 W, 500 W, 800 W, 1,000 W, 1,500 W, 3,000 W, 4,500 W, 5,000 W, 6,000 W, 7,000 W, 8,000 W, 9,000 W, and 10,000 W. In this way, the heating film of the present disclosure can effectively generate heat across a wide range of power. Both ultra-low power heating and ultra-high power heating can be realized, which meet power use requirements of the heating film under various application conditions.

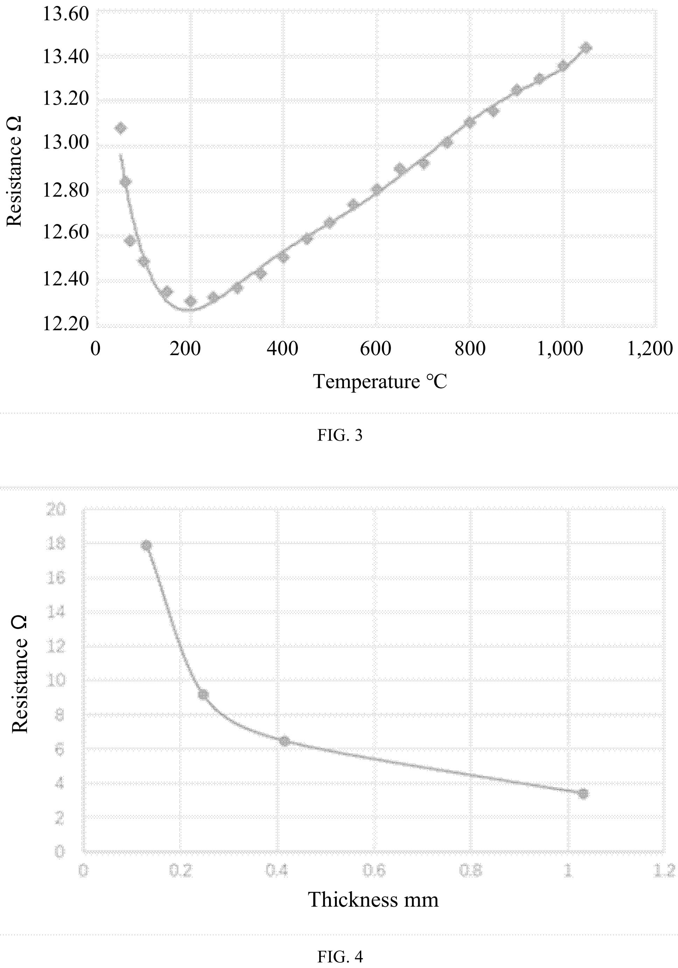

According to some embodiments of the present disclosure, the heating film prepared from the natural graphite and/or graphene nanoplatelets also has a characteristic of self-limiting temperature. In an exemplary embodiment of the present disclosure, as illustrated in FIG. 3, the heating film has a critical temperature. When the heating film has a temperature smaller than the critical temperature, resistance of the heating film decreases with an increase in the temperature. When the temperature of the heating film is greater than the critical temperature, the resistance of the heating film increases with the increase in the temperature. In this way, the heating film of the present disclosure has the characteristic of self-limiting temperature. In an exemplary embodiment of the present disclosure, at an initial stage of heating (i.e., when the temperature of the heating film is smaller than the critical temperature), the resistance of the heating film decreases with the increase in the temperature, and thus a current increases, in such a manner that the power of the heating film with the increase in the temperature. In this way, at the initial stage, the heating film can rapidly heat up. When the temperature of the heating film reaches the critical temperature, the resistance of the heating film increases with the increase in the temperature, and thus the current decreases, in such a manner that the power of the heating film decreases with the increase in the temperature. Therefore, at this stage, the temperature rise rate of the heating film begins to slow down, and slowly and gradually reaches the maximum heating temperature of the heating film. On the one hand, the characteristic of self-limiting temperature of the heating film enables the heating film to accelerate a heating speed of a temperature zone below the critical temperature, in such a manner that the heating film can reach a target temperature as soon as possible. On the other hand, the characteristic of self-limiting temperature of the heating film enables the heating film to realize a reduction of occurrences of fusing caused during a continuous increase of the heating temperature when the heating temperature is higher than the critical temperature. Therefore, reliability and stability of the heating film can be improved. It should be noted that FIG. 3 is only a temperature-resistance graph of the heating film according to one embodiment. However, a trend of the graph represents a schematic temperature-resistance graph of the heating film of the present disclosure.

According to some embodiments of the present disclosure, as illustrated in FIG. 4, resistance characteristics (isodensity) of a carbon-based heating film is that the resistance gradually decreases as a thickness increases. With an increase in the thickness, the resistance becomes smaller. With a decrease in the thickness, the resistance becomes greater. In this regard, in the present disclosure, the heating films having different power can be obtained under the above-mentioned density conditions and thickness conditions. Further, the heating films may have different powers based on parameters such as thicknesses, density stages, and lengths of the heating films.

According to some embodiments of the present disclosure, the heating film has a thickness ranging from 0.04 mm to 2 mm, a length ranging from 250 mm to 450 mm (e.g., 250 mm, 280 mm, 300 mm, 320 mm, 350 mm, 370 mm, 400 mm, 420 mm, and 450 mm), a width ranging from 6 mm to 10 mm (e.g., 6 mm, 7 mm, 8 mm, 9 mm, and 10 mm), a density ranging from 1.2 g/cm³ to 1.8 g/cm³ (e.g., 1.2 g/cm³, 1.3 g/cm³, 1.4 g/cm³, 1.5 g/cm³, 1.6 g/cm³, 1.7 g/cm³, and 1.8 g/cm³), and a power ranging from 30 W to 5,000 W, e.g., 30 W, 40 W, 50 W, 80 W, 100 W, 150 W, 200 W, 300 W, 400 W, 800 W, 1,000 W, 1,300 W, 1,500 W, 1,800 W, 2,000 W, 2,300 W, 2,500 W, 2,800 W, 3,000 W, 3,200 W, 3,500 W, 3,800 W, 4,000 W, 4,200 W, 4,500 W, 4,800 W, and 5,000 W. The heating film satisfying the above-mentioned conditions of length, thickness, and density can have the power ranging from 30 W to 5,000 W. An appropriate heating temperature can be obtained through adjusting the power to obtain a desired heating film.

According to some embodiments of the present disclosure, the heating film has a thickness ranging from 0.04 mm to 2 mm, a length ranging from 450 mm to 650 mm (e.g., 450 mm, 500 mm, 520 mm, 550 mm, 580 mm, 600 mm, 630 mm, and 650 mm), a width ranging from 6 mm to 10 mm (e.g., 6 mm, 7 mm, 8 mm, 9 mm, and 10 mm), a density ranging from 1.2 g/cm³ to 1.8 g/cm³ (e.g., 1.2 g/cm³, 1.3 g/cm³, 1.4 g/cm³, 1.5 g/cm³, 1.6 g/cm³, 1.7 g/cm³, and 1.8 g/cm³), and a power ranging from 25 W to 10,000 W, e.g., 25 W, 30 W, 40 W, 50 W, 60 W, 70 W, 100 W, 150 W, 300 W, 500 W, 800 W, 1,000 W, 1,500 W, 3,000 W, 4,500 W, 5,000 W, 6,000 W, 7,000 W, 8,000 W, 9,000 W, and 10,000 W. The heating film satisfying the above-mentioned conditions of length, thickness, and density can have the power ranging from 25 W to 5,000 W. An appropriate heating temperature can be obtained through adjusting the power to obtain a desired heating film.

According to some embodiments of the present disclosure, the heating film has a thickness ranging from 0.04 mm to 2 mm, a length ranging from 250 mm to 450 mm, a width ranging from 6 mm to 10 mm, a density ranging from 0.6 g/cm³ to 1.2 g/cm³ (e.g., 0.6 g/cm³, 0.7 g/cm³, 0.8 g/cm³, 0.9 g/cm³, 1.0 g/cm³, 1.1 g/cm³, and 1.2 g/cm³), and a power ranging from 10 W to 3,400 W, e.g., 10 W, 15 W, 20 W, 40 W, 50 W, 70 W, 100 W, 150 W, 300 W, 500 W, 800 W, 1,000 W, 1,500 W, 3,000 W, and 3,400 W. The heating film satisfying the above-mentioned conditions of length, thickness, and density can have the power ranging from 10 W to 5,000 W. An appropriate heating temperature can be obtained through adjusting the power to obtain a desired heating film.

According to some embodiments of the present disclosure, the heating film has a thickness ranging from 0.04 mm to 2 mm, a length ranging from 450 mm to 650 mm, a width ranging from 6 mm to 10 mm, a density ranging from 0.6 g/cm³ to 1.2 g/cm³ (e.g., 0.6 g/cm³, 0.7 g/cm³, 0.8 g/cm³, 0.9 g/cm³, 1.0 g/cm³, 1.1 g/cm³, and 1.2 g/cm³), and a power ranging from 10 W to 7,000 W, e.g., 10 W, 20 W, 40 W, 50 W, 70 W, 100 W, 150 W, 300 W, 500 W, 800 W, 1,000 W, 1,500 W, 3,000 W, 3,400 W, 4,000 W, 4,500 W, 5,000 W, 5,400 W, 6,000 W, 6,500 W, and 7,000 W. The heating film satisfying the above-mentioned conditions of length, thickness, and density can have the power ranging from 10 W to 7,000 W. An appropriate heating temperature can be obtained through adjusting the power to obtain a desired heating film.

According to some embodiments of the present disclosure, the heating film has a thermal diffusion coefficient ranging from 50 m²/s to 450 m²/s, e.g., 50 m²/s, 80 m²/s, 100 m²/s, 130 m²/s, 150 m²/s, 280 m²/s, 300 m²/s, 320 m²/s, 350 m²/s, 370 m²/s, 400 m²/s, 420 m²/s, and 450 m²/s. The above thermal diffusion coefficient enables the heat of the heating film to be transferred to a heating cavity at a relatively suitable rate, in such a manner that the heat generated by the heating film is mainly concentrated on the to-be-heated object. In this way, a satisfactory heating rate can be ensured, while the heat is prevented from being radiated out quickly to avoid a large heat loss. In addition, the above thermal diffusion coefficient also helps to prolong the service life of the heating film and improve the manufacturability of the heating film.

According to some embodiments of the present disclosure, the heating temperature of the heating film ranges from 500°C to 1,700°C. For example, the heating temperature of the heating film may be 500°C, 550°C, 600°C, 700°C, 800°C, 900°C, 1,000°C, 1,100°C, 1,200°C, 1,300°C, 1,400°C, 1,500°C, 1,600°C, 1,700°C, or the like. As can be seen above, the heating temperature of the heating film of the present disclosure can reach a maximum of 1,700°C. In addition, those skilled in the art can flexibly adjust the maximum heating temperature of the heating film by adjusting the density and/or the thickness of the heating film based on specific application requirements of the heating film. Therefore, more application heating requirements of the heating film can be satisfied, and various heating films having different power can be obtained. For example, the ultra-low power heating film or the ultra-high power heating film can be obtained.

In an embodiment of the present disclosure, a specific cut type of the heating film can be diversified. Those skilled in the art can flexibly design the cut type of the heating film based on requirements of actual situations such as the resistance and the power of the heating film. Some cut types of the heating film will be described below in accordance with some specific embodiments of the present disclosure.

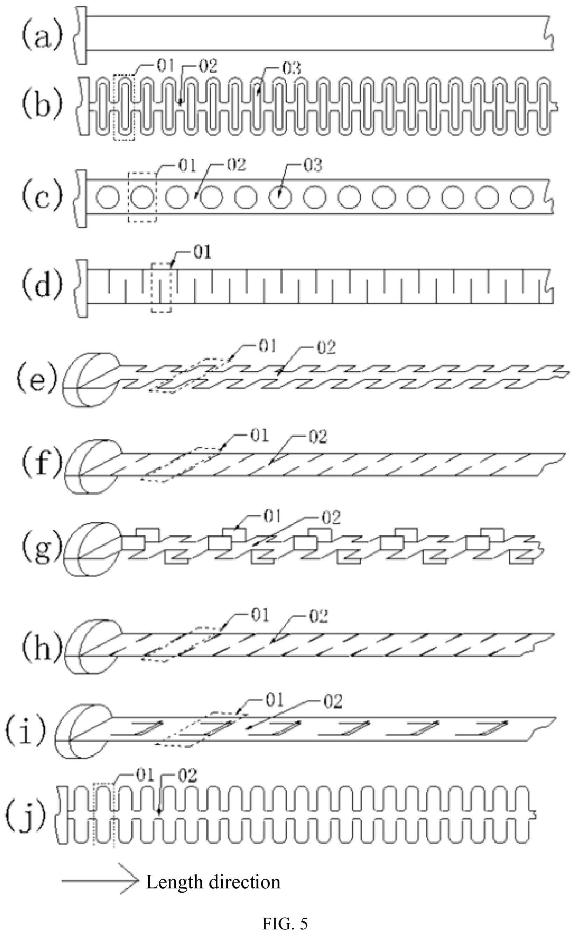

According to some embodiments of the present disclosure, as illustrated in FIG. 5, the heating film comprises a plurality of heating units 01 sequentially arranged in a length direction. Two adjacent heating units 01 are spaced apart from each other and connected through a connection segment 02. Therefore, the heating film of the present disclosure can be cut into various structures with different cut types to meet different use requirements. In some embodiments of the present disclosure, as illustrated in FIG. 5, the heating unit has an outer peripheral wall formed in an oblong shape or a polygonal shape.

In some embodiments of the present disclosure, as illustrated in FIG. 5(b), FIG. 5(c), and FIG. 5(i), each heating unit 01 has a hollow hole 03. Therefore, the hollow hole can accelerate a heat dissipation rate of the heating film and accelerate a heating rate for the to-be-heated object.

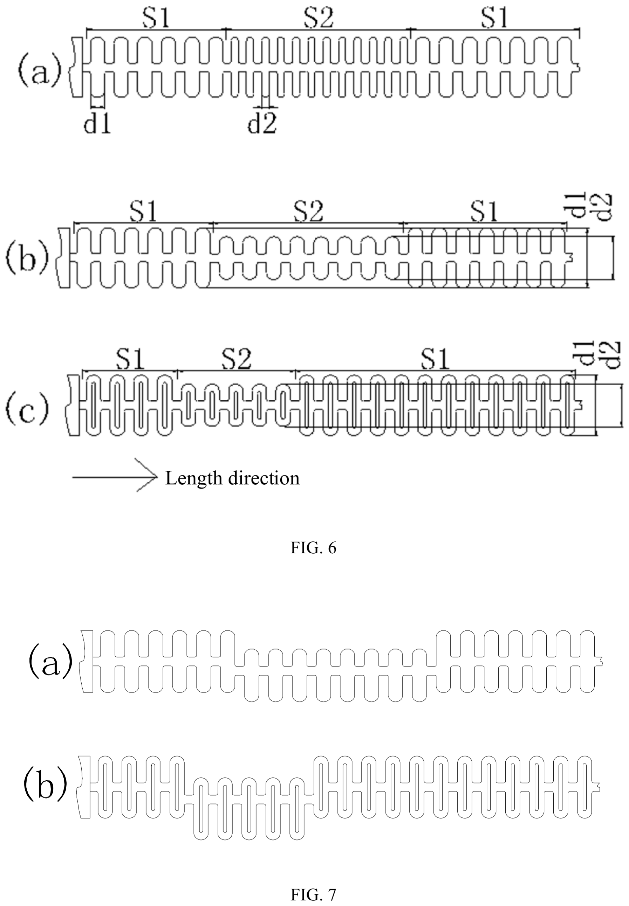

In some embodiments of the present disclosure, as illustrated in FIG. 6, the heating film comprises a first heating segment S2 and a second heating segment S1 that are adjacent to each other in the length direction. The first heating segment S2 comprises a plurality of heating units 01 connected to each other. The second heating segment S1 comprises a plurality of heating units 01 adjacent to each other. The heating unit 01 corresponding to the first heating segment S2 has a smaller size than the heating unit 01 corresponding to the second heating segment S1. For example, as illustrated in FIG. 6(a), the heating unit 01 corresponding to the first heating segment S2 has the same length as the heating unit 01 corresponding to the second heating segment S1, but a width d2 of the heating unit 01 corresponding to the first heating segment S2 and a width d1 of the heating unit 01 corresponding to the second heating segment S1 are different, where d2<d1. For example, as illustrated in FIG. 6(b) and FIG. 6(c), the heating unit 01 corresponding to the first heating segment S2 has the same width as the heating unit 01 corresponding to the second heating segment S1, but the width d2 of the heating unit 01 corresponding to the first heating segment S2 and the width d1 of the heating unit 01 corresponding to the second heating segment S1 are different, where d2<d1. Therefore, a structure of the heating film can be diversified.

In some embodiments of the present disclosure, as illustrated in FIG. 7, the first heating segment and the second heating segment are offset from each other in a width direction of the heating film. Therefore, the structure of the heating film can be diversified.

In some embodiments of the present disclosure, as illustrated in FIG. 5(d), FIG. 5(e), FIG. 5(f), FIG. 5(h), FIG. 5(i), and FIG. 5(j), the heating film has a plurality of notches arranged at intervals in the length direction, thereby diversifying the structure of the heating film. Further, in some embodiments of the present disclosure, as illustrated in FIG. 5(i), each of the plurality of notches is defined through separating a part of the heating film from the remaining part of the heating film and then bending the part of the heating film.

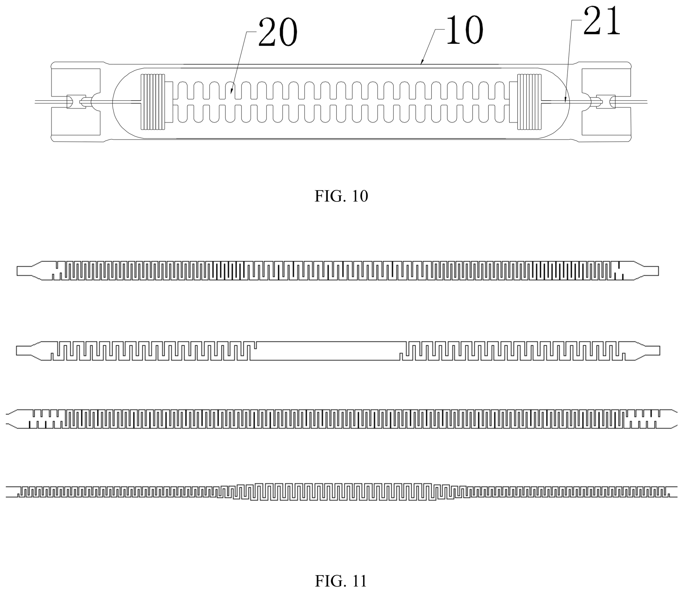

In some embodiments, as illustrated in FIG. 11, one heating film may comprise various cut types, or one heating film may comprise one cut type distributed with an uneven density distribution.

In another aspect, the present disclosure provides a method for preparing the heating film as described above. According to an embodiment of the present disclosure, the heating film may be prepared from the natural graphite and the graphene, respectively. Specific preparation operations are as follows.

In some embodiments, a method for preparing the heating film from the natural graphite comprises the following steps.

In S100, natural graphite is provided, and an intercalation treatment is performed on the natural graphite to obtain expandable graphite.

In the present disclosure, the natural graphite can be obtained without additional processing processes, which can further simplify the process flow of preparing the heating film and thus reduce the costs. If artificial graphite is used, a process flow of manufacturing the artificial graphite needs to be set up, which greatly increases manufacturing costs and manufacturing time of the heating film and reduces a manufacturing efficiency. In addition, by using natural flake graphite, which has a layered structure in its single-layer form, the graphite in the prepared heating film also has a layered structure, improving a concentrated heating effect of the heating film. In addition, the natural flake graphite takes a great proportion among global mineral resources. Further, a material of a carbon-based film does not require high-temperature graphitization in a preparation process, and can be manufactured in a continuous manner, which can in turn improve the manufacturing efficiency and reduce the manufacturing costs. An elimination of the high-temperature graphitization also improves safety of manufacturing.

In addition, the natural flake graphite takes a great proportion among global mineral resources. Further, a material of a carbon-based film does not require high-temperature graphitization in a preparation process, and can be manufactured in a continuous manner, which can in turn improve the manufacturing efficiency and reduce the manufacturing costs. An elimination of the high-temperature graphitization also improves safety of manufacturing.

In some embodiments, a specific method of the intercalation treatment may intercalate the natural flake graphite with an oxide such as concentrated sulfuric acid and/or hydrogen peroxide to obtain the expandable graphite.

In S200, an expansion treatment is performed on the expandable graphite to obtain expanded graphite.

In some embodiments, the expandable graphite, after entering an expansion furnace, is subjected to an instant high temperature and rapidly expands to form graphite worm, i.e., the expanded graphite. Through the expansion treatment, an expansion ratio of the expandable graphite may range from 30 times to 400 times. During the expansion treatment, an expansion temperature ranges from 850°C to 1,200°C, and an expansion duration ranges from 0.7 s to 1.3 s.

In S300, calendering, a first heat treatment, and cutting are performed on the expanded graphite to obtain the heating film. The heating films of different cut types obtained after the cutting can refer to FIG. 5 to FIG. 7. Characteristics of specific cut types are consistent with the requirements mentioned above, which are thereof not described in detail herein.

No special requirement is set forth for a specific method of the first heat treatment. Those skilled in the art can adopt a specific heat treatment method in the related art for deoxidizing graphite oxide to obtain graphite.

In this way, the thickness and the density of the heating film can be controlled by calendering the expanded graphite. The thickness and the density of the heating film are as described above, which are not described in detail herein.

According to an embodiment of the present disclosure, the heating film of graphite is prepared using the natural graphite, in such a manner that the heating film has a high heating temperature and a high heating rate, which are conducive to reaching a higher temperature of heating and a higher heating efficiency. In addition, the heating film of the present disclosure is made of natural graphite, a mine of which takes a great proportion among global mineral resources. Further, a material of a carbon-based film does not require high-temperature graphitization in a preparation process, and it is obtainable without other processes of preparation and can be manufactured in a continuous manner, which reduce costs. On the whole, the material of the carbon-based film has advantages such as a wide range of raw material sources, simple preparation process, good product stability, on-demand adjustment of performance parameters, and ease of adjustment. These advantages confer significant benefits in terms of reducing product costs, enhancing product reliability, diversifying product lines, and the like. If artificial graphite is used, a process flow of manufacturing the artificial graphite is required to be set up, which greatly increases manufacturing costs and manufacturing time of the heating film and reduces a manufacturing efficiency. In addition, the heating film prepared from the natural graphite has a fast heating speed, a high heating temperature, and a rapid temperature rise rate. Further, when the above conditions are satisfied, the heating film can meet requirements of different power for the heating film. Moreover, the carbon-based heating film of the present disclosure has high manufacturability, i.e., high production yield, as well as a long service life.

In some embodiments, a method for preparing the heating film from the graphene comprises the following operations.

In S400, graphene and an additive are uniformly mixed and dispersed to obtain a dispersion.

In some embodiments, the graphene used are graphene nanoplatelets. The graphene nanoplatelets have a planar dimension ranging from 1 µm to 100 µm and a specific surface area ranging from 30 m²/g to 800 m²/g. The graphene nanoplatelets satisfying the above requirements are conducive to uniform dispersion.

In some embodiments, the additive comprises at least one of carboxymethyl cellulose, polyvinyl alcohol, polyethylene glycol, polyacrylic acid, and aqueous polyurethane. An addition of the above additive can effectively enhance a film-forming ability of the graphene nanoplatelets.

Further, based on a total mass of the dispersion, a mass fraction of the additive is smaller than or equal to 5 wt%, such as 1 wt%, 1.5 wt%, 2 wt%, 2.5 wt%, 3 wt%, 3.5 wt%, 4 wt%, 4.5 wt%, and 5 wt%. The amount of the used additive is low, which will not affect satisfactory performance of the heating film.

In S500, a dispersion film is obtained by coating the dispersion.

In some embodiments, the coating method is not specifically limited. Those skilled in the art can flexibly select an appropriate coating method as desired, such as spin coating, spray coating, and the like.

In S600, a second heat treatment is performed on the dispersion film to obtain a preliminary carbon-based film.

In this step, graphene is deoxygenated through the second heat treatment to obtain a graphite material. The heat treatment may be carried out in a vacuum atmosphere or an inert atmosphere. The second heat treatment is performed at a temperature ranging from 1,500°C to 3,000°C. Through the above method, graphite with a high carbon content can be obtained. For example, the carbon content can be more than 99%.

In S700, calendering and cutting are performed on the preliminary carbon-based film to obtain the heating film. The heating film of a predetermined cut type is obtained through the cutting. The specific cut type can refer to FIG. 5, FIG. 6 and FIG. 7. Characteristics of the specific cut type are consistent with the requirements described above, which are not described in detail herein.

According to an embodiment of the present disclosure, when using the graphene as the raw material, the heating film with the high carbon content can be obtained, and the processing technique is simple and mature, which keeps the manufacturing costs at the modest level. In addition, the adopted graphene nanoplatelets have satisfactory thermal conductivity and tensile strength, which in turn help to increase the heating temperature and improve the mechanical strength of the prepared heating film.

In yet another aspect, the present disclosure provides a heating pipe. According to an embodiment of the present disclosure, the heating pipe comprises the heating film described above. Therefore, the heating pipe has a high heating temperature, a high heating rate, and a concentrated heating region, which greatly improves a heating efficiency of the heating pipe. It is conceivable for those skilled in the art that the heating pipe has all the features and advantages of the heating film described above, and thus details thereof will be omitted here.

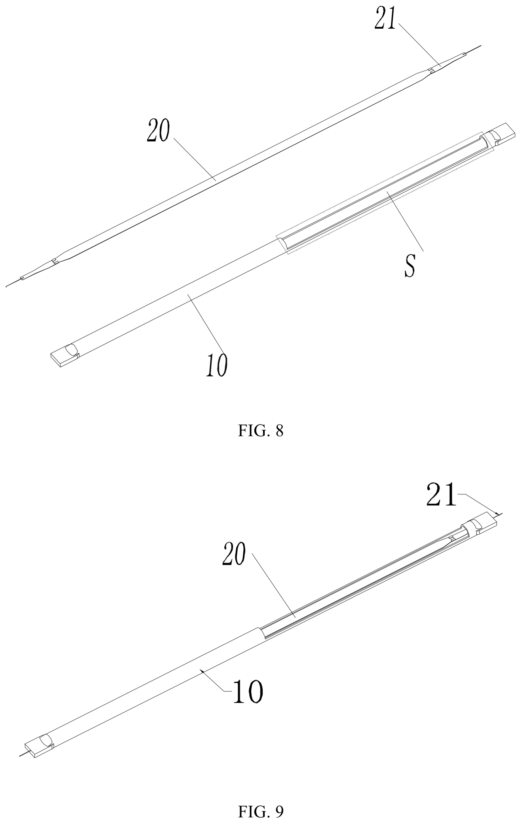

In some embodiments, as illustrated in FIG. 8 (region S in FIG. 8 refers to a partial cross-sectional view of a sleeve), FIG. 9, and FIG. 10, the heating pipe further comprises a sleeve 10. The heating film 20 is disposed in the sleeve 10, and has terminals 21 arranged at two ends of the heating film 20. The sleeve may be a quartz glass pipe or the like.

In still yet another aspect, the present disclosure provides a heating appliance. According to an embodiment of the present disclosure, the heating appliance comprises the heating pipe described above. Therefore, the heating appliance has a high heating temperature, a high heating rate, and a concentrated heating region, which greatly improves a heating efficiency of the heating appliance.

According to an embodiment of the present disclosure, the heating appliance is an electric oven, a microwave oven, a combi steam oven, an electric kettle, an electric blanket, an electric warm air blower, an electric heater, a bath heater, an electric ceramic cooktop, or a disinfection cabinet.

Those skilled in the art can understand that, in addition to the above-mentioned heating pipe, the heating appliance further comprises necessary structures or components for the heating appliance. As an example, in addition to the above-mentioned heating pipe, an electric oven further comprises a housing, a heating space, a base, a plug, and other necessary structures or components.

### Examples

Example 1 to Example 7, Comparative example 1, and Comparative example 2

The heating film was prepared with the natural flake graphite. The heating film had a density of 1.8 g/cm³, a length of 300 mm, and a width of 8 mm. The cut type of the heating film was as illustrated in FIG. 5(a). Density, power, and performance tests of the heating film are shown in Table 1 below. Table 1 reveals that under the condition of a constant density, the power of the heating film increased with an increase in the thickness, but the manufacturability of the heating film was affected when the thickness was excessively great or small. In addition, the heating films in the examples all had high heating temperatures.

**[Table 1]**

| | Comparative example 1 | Example 1 | Example 2 | Example 3 | Example 4 | Example 5 | Example 6 | Example 7 | Comparative example 2 |
|---|---|---|---|---|---|---|---|---|---|
| Thickness/mm | 0.03 | 0.08 | 0.1 | 0.2 | 0.5 | 1.0 | 1.5 | 2.0 | 2.5 |
| Lower power limit/W | / | 30 | 40 | 80 | 200 | 400 | 600 | 800 | 1,000 |
| Upper power limit/W | / | 400 | 500 | 850 | 1,500 | 2,480 | 3,700 | 5,000 | 6,000 |
| Manufacturability | Unsatisfactory | Satisfactory | Satisfactory | Satisfactory | Satisfactory | Satisfactory | Satisfactory | Satisfactory | Unsatisfactory |
| Service life | Unqualified | Qualified | Qualified | Qualified | Qualified | Qualified | Qualified | Qualified | Qualified |
| Heating temperature/°C (at 400W) | / | 1,008 | 1,005 | 1,000 | 994 | 989 | 982 | 977 | 971 |

### Example 8 to Example 14, Comparative example 3, and Comparative example 4

The heating film was prepared with the natural flake graphite. The heating film had a density of 1.8 g/cm³, a length of 600 mm, and a width of 8 mm. The cut type of the heating film was as illustrated in FIG. 5(a). Density, power, and performance tests of the heating film are shown in Table 2 below. Table 2 reveals that under the condition of a constant density, the power of the heating film increased with an increase in the thickness, but the manufacturability of the heating film was affected when the thickness was excessively great or small. In addition, the heating films in the examples all had high heating temperatures.

**[Table 2]**

| | Comparative example 3 | Example 8 | Example 9 | Example 10 | Example 11 | Example 12 | Example 13 | Example 14 | Comparative example 4 |
|---|---|---|---|---|---|---|---|---|---|
| Thickness/mm | 0.03 | 0.08 | 0.1 | 0.2 | 0.5 | 1.0 | 1.5 | 2.0 | 2.5 |
| Lower power limit/W | / | 32 | 60 | 120 | 300 | 600 | 900 | 1,200 | 1,500 |
| Upper power limit/W | / | 800 | 1,000 | 1,700 | 3,000 | 4,960 | 7,400 | 10,000 | 12,000 |
| Manufacturability | Unsatisfactory | Satisfactory | Satisfactory | Satisfactory | Satisfactory | Satisfactory | Satisfactory | Satisfactory | Unsatisfactory |
| Service life | Unqualified | Qualified | Qualified | Qualified | Qualified | Qualified | Qualified | Qualified | Qualified |
| Heating temperature/°C (at 800W) | / | 1,012 | 1,008 | 1,003 | 997 | 991 | 984 | 977 | 973 |

### Example 15 to Example 21, Comparative example 5, and Comparative example 6

The heating film was prepared with the natural flake graphite. The heating film had a density of 0.6 g/cm³, a length of 300 mm, and a width of 8 mm. The cut type of the heating film was as illustrated in FIG. 5(a). Density, power, and performance tests of the heating film are shown in Table 3 below. Table 3 reveals that under the condition of a constant density, the power of the heating film increased with an increase in the thickness, but the manufacturability of the heating film was affected when the thickness was excessively great or small. In addition, the heating films in the examples all had high heating temperatures.

**[Table 3]**

| | Comparative example 5 | Example 15 | Example 16 | Example 17 | Example 18 | Example 19 | Example 20 | Example 21 | Comparative example 6 |
|---|---|---|---|---|---|---|---|---|---|
| Thickness/mm | 0.03 | 0.08 | 0.1 | 0.2 | 0.5 | 1.0 | 1.5 | 2.0 | 2.5 |
| Lower power limit/W | / | 11 | 15 | 27 | 68 | 135 | 200 | 270 | 340 |
| Upper power limit/W | / | 270 | 340 | 570 | 1,000 | 1,700 | 2,500 | 3,400 | 4,000 |
| Manufacturability | Unsatisfactory | Satisfactory | Satisfactory | Satisfactory | Satisfactory | Satisfactory | Satisfactory | Satisfactory | Unsatisfactory |
| Service life | Unqualified | Qualified | Qualified | Qualified | Qualified | Qualified | Qualified | Qualified | Qualified |
| Heating temperature/°C (at 240W) | / | 727 | 725 | 723 | 720 | 716 | 714 | 711 | 708 |

### Example 22 to Example 28, Comparative example 7, and Comparative example 8

The heating film was prepared with the natural flake graphite. The heating film had a density of 0.6 g/cm³, a length of 600 mm, and a width of 8 mm. The cut type of the heating film was as illustrated in FIG. 5(a). Density, power, and performance tests of the heating film are shown in Table 4 below. Table 4 reveals that under the condition of a constant density, the power of the heating film increased with an increase in the thickness, but the manufacturability of the heating film was affected when the thickness was excessively great or small. In addition, the heating films in the examples all had high heating temperatures.

**[Table 4]**

| | Comparative example 7 | Example 22 | Example 23 | Example 24 | Example 25 | Example 26 | Example 27 | Example 28 | Comparative example 8 |
|---|---|---|---|---|---|---|---|---|---|
| Thickness/mm | 0.03 | 0.08 | 0.1 | 0.2 | 0.5 | 1.0 | 1.5 | 2.0 | 2.5 |
| Lower power limit/W | / | 11 | 20 | 40 | 100 | 200 | 300 | /400 | /500 |
| Upper power limit/W | / | 525 | 660 | 1,110 | 1,975 | 3,360 | 4,950 | 6,820 | 7,915 |
| Manufacturability | Unsatisfactory | Satisfactory | Satisfactory | Satisfactory | Satisfactory | Satisfactory | Satisfactory | Satisfactory | Unsatisfactory |
| Service life | Unqualified | Qualified | Qualified | Qualified | Qualified | Qualified | Qualified | Qualified | Qualified |
| Heating temperature/°C (at 480W) | / | 745 | 741 | 736 | 730 | 725 | 722 | 718 | 715 |

### Example 29 to Example 35, Comparative example 9, and Comparative example 10

The heating film was prepared with the natural flake graphite. The heating film had a density of 1.0 g/cm³, a length of 600 mm, and a width of 8 mm. The cut type of the heating film was as illustrated in FIG. 5(a). Density, power, and performance tests of the heating film are shown in Table 5 below. Table 5 reveals that under the condition of a constant density, the power of the heating film increased with an increase in the thickness, but the manufacturability of the heating film was affected when the thickness was excessively great or small. In addition, the heating films in the examples all had high heating temperatures.

**[Table 5]**

| | Comparative example 9 | Example 29 | Example 30 | Example 31 | Example 32 | Example 33 | Example 34 | Example 35 | Comparative example 10 |
|---|---|---|---|---|---|---|---|---|---|
| Thickness/mm | 0.03 | 0.08 | 0.1 | 0.2 | 0.5 | 1.0 | 1.5 | 20 | 2.5 |
| Lower power limit/W | / | 17 | 33 | 65 | 170 | 325 | 500 | 650 | 810 |
| Upper power limit/W | / | 650 | 820 | 1,400 | 2,490 | 4,030 | 5,890 | 7,900 | 9,200 |
| Manufacturability | Unsatisfactory | Satisfactory | Satisfactory | Satisfactory | Satisfactory | Satisfactory | Satisfactory | Satisfactory | Unsatisfactory |
| Service life | Unqualified | Qualified | Qualified | Qualified | Qualified | Qualified | Qualified | Qualified | Qualified |
| Heating temperature/°C (at 600W) | / | 836 | 830 | 826 | 822 | 817 | 814 | 811 | 807 |

### Example 36 to Example 42, Comparative example 11, and Comparative example 12

The heating film was prepared with the natural flake graphite. The heating film had a density of 1.5 g/cm³, a length of 600 mm, and a width of 8 mm. The cut type of the heating film was as illustrated in FIG. 5(a). Density, power, and performance tests of the heating film are shown in Table 6 below. Table 6 reveals that under the condition of a constant density, the power of the heating film increased with an increase in the thickness, but the manufacturability of the heating film was affected when the thickness was excessively great or small. In addition, the heating films in the examples all had high heating temperatures.

**[Table 6]**

| | Comparative example 11 | Comparative example 36 | Example 37 | Example 38 | Example 39 | Example 40 | Example 41 | Example 42 | Comparative example 12 |
|---|---|---|---|---|---|---|---|---|---|
| Thickness/mm | 0.03 | 0.08 | 0.1 | 0.2 | 0.5 | 1.0 | 1.5 | 2.0 | 2.5 |
| Lower power limit/W | / | 26 | 51 | 105 | 245 | 490 | 740 | 1,010 | 1,200 |
| Upper power limit/W | / | 740 | 920 | 1,600 | 2,820 | 4,650 | 6,830 | 9,200 | 10,960 |
| Manufacturability | Unsatisfactory | Satisfactory | Satisfactory | Satisfactory | Satisfactory | Satisfactory | Satisfactory | Satisfactory | Unsatisfactory |
| Service life | Unqualified | Qualified | Qualified | Qualified | Qualified | Qualified | Qualified | Qualified | Qualified |
| Heating temperature/°C (at 600W) | / | 924 | 920 | 917 | 911 | 907 | 903 | 899 | 896 |

Test data in the above Table 1 to Table 6 reveal that, the heating film of the present disclosure, when having the thickness ranging from 0.04 mm to 2 mm and the density ranging from 0.6 g/cm³ to 1.8 g/cm³, can be used to manufacture various different ultra-low or ultra-high power heating films to obtain different heating temperatures, satisfying various application requirements. Moreover, under the predetermined conditions, the heating temperature of the heating film gradually decreases with the increase in the thickness of the heating film.

The above-mentioned manufacturability was determined based on that the heating film has satisfactory flexibility and certain rigidity, allows for easy demolding and transfer, demonstrates favorable processing and manufacturing outcomes, and is resistant to tearing or breaking. Normally, a production yield of no less than 99% qualifies the manufacturability as "satisfactory". Otherwise, the manufacturability is qualified as "unsatisfactory."

The above service life was tested with the following method. The heating film was applied with 1.1 times a rated voltage. After the heating film had continuously operated for 525 hours, the heating film satisfied the following conditions. (1) The heating pipe had no cracks, notches, or deformation. (2) The heating film had no fracture and no bending deformation, and a power deviation meeting design requirements of the drawing. (3) Insulation resistance: a test was performed between a live part (terminal) of the heating pipe and a non-live part (pipe wall) of the heating pipe using a DC500V insulation resistance meter, with a test resistance ≥ 500 MΩ (DC500V). (4) Insulation strength: a voltage of 1,800VAC/3S/5mA was applied between the live part (terminal) of the heating pipe and the non-live part (pipe wall) of the heating pipe. The insulation strength was qualified when no flashover or breakdown occurred.

### Example 43

The heating film (with the cut type as illustrated in FIG. 5(a)) of the present disclosure having the thickness of 1.0 mm and the density of 1.2 g/cm³ was manufactured into the heating pipe. The heating pipe, a halogen pipe, a quartz pipe, and a metallic pipe were applied in a same oven, separately. All of the above pipes were tested at power of 600 W. Time required for each of the above pipes to reach 200°C was measured. Test results are shown in Table 7. When the power of the heating pipes manufactured using heating films of different thicknesses and densities was 600 W, the time required for the oven to reach 200°C was measured. Test results are shown in Table 8.

**[Table 7]**

| | Heating pipe manufactured using heating film | Halogen pipe | Quartz pipe | Metallic pipe |
|---|---|---|---|---|
| Time (s) | 149 | 218 | 290 | 279 |

**[Table 8]**

| No. | Thickness of heating film (mm) | Density of heating film (g/cm³) | Time (s) |
|---|---|---|---|
| 43-1 | 0.1 | 1.2 | 148 |
| 43-2 | 0.5 | 1.2 | 149 |
| 43-3 | 1.0 | 1.2 | 149 |
| 43-4 | 1.5 | 1.2 | 154 |
| 43-5 | 2.0 | 1.2 | 154 |
| 43-6 | 1.0 | 0.6 | 149 |
| 43-7 | 1.0 | 0.8 | 150 |
| 43-8 | 1.0 | 1.0 | 149 |
| 43-9 | 1.0 | 1.4 | 150 |
| 43-10 | 1.0 | 1.6 | 152 |
| 43-11 | 1.0 | 1.8 | 154 |

The above test results reveal that the heating pipe manufactured using the heating film of the present disclosure could reach the desired heating temperature within a relatively short time. That is, the heating film of the present disclosure has a relatively high heating rate, and therefore has a satisfactory heating efficiency.

### Example 44, Example 45, Comparative example 13, and Comparative example 14

The heating film was prepared with the natural flake graphite. The heating film had a thickness of 1.0 mm, a density of 1.2 g/cm³, and a width of 8 mm. The cut type of the heating film was as illustrated in FIG. 5(a). Thermal diffusion coefficients and performance tests of the heating films in different examples can refer to Table 9 below. The heating film in each example was manufactured into the heating pipe. All the heating pipes were tested at the power of 600 W. Time required for each heating pipe when the oven reaches 200°C was tested. Test results are shown in Table 9.

**[Table 9]**

| | Thermal diffusion coefficient (m²/s) | Service life | Power (W) | Time (s) |
|---|---|---|---|---|
| Example 44 | 50 | Qualified | 600 | 136 |
| Example 45 | 100 | Qualified | 600 | 139 |
| Example 46 | 150 | Qualified | 600 | 132 |
| Example 47 | 200 | Qualified | 600 | 144 |
| Example 48 | 240 | Qualified | 600 | 146 |
| Example 49 | 300 | Qualified | 600 | 149 |
| Example 50 | 350 | Qualified | 600 | 152 |
| Example 51 | 400 | Qualified | 600 | 156 |
| Example 52 | 450 | Qualified | 600 | 159 |
| Comparative example 13 | 40 | Unqualified | 600 | 133 |
| Comparative example 14 | 470 | Qualified | 600 | 161 |

The above test results reveal that when the thermal diffusion coefficient of the heating film of the present disclosure ranges from 50 m²/s to 450 m²/s, the service life of the heating film can be effectively prolonged. In addition, the heating film has a high heating efficiency, capable of reaching a high heating temperature within a short time. When the thermal diffusion coefficient is greater than 450 m²/s, the heating time is prolonged. Also, it is difficult in the process for realizing the high density of the heating film, i.e., a process difficulty is increased.

The terms "first" and "second" are only used for descriptive purposes, and cannot be understood as indicating or implying relative importance or implicitly indicating the number of indicated technical features. Therefore, the features associated with "first" and "second" may explicitly or implicitly comprise at least one of the features. In the description of the present disclosure, "plurality" means at least two, unless otherwise specifically defined.

Reference throughout this specification to terms such as "an embodiment", "some embodiments", "an example", "a specific example", or "some examples" means that a particular feature, structure, material, or characteristic described in connection with the embodiment or example is comprised in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although the embodiments of the present disclosure have been shown and described above, it should be understood that the above-mentioned embodiments are illustrative and should not be construed as limiting the present disclosure. Those skilled in the art can make changes, modifications, substitutions, and alternations to the above-mentioned embodiments within the scope of the present disclosure.

## Claims

1. A heating film, wherein a raw material for the heating film comprises natural graphite and/or graphene, and wherein the heating film satisfies at least one of the following conditions:
the heating film has a thickness ranging from 0.04 mm to 2 mm; and
the heating film has a density ranging from 0.6 g/cm³ to 1.8 g/cm³.

2. The heating film according to claim 1, having a carbon content greater than or equal to 99%.

3. The heating film according to claim 1 or 2, having a power ranging from 15 W to 10,000 W.

4. The heating film according to claim 3, satisfying at least one of the following conditions:
the heating film has a length ranging from 250 mm to 450 mm, a width ranging from 6 mm to 10 mm, the density ranging from 1.2 g/cm³ to 1.8 g/cm³, and the power ranging from 30 W to 5,000 W;
the heating film has the length ranging from 450 mm to 650 mm, the width ranging from 6 mm to 10 mm, the density ranging from 1.2 g/cm³ to 1.8 g/cm³, and the power ranging from 25 W to 10,000 W;
the heating film has the length ranging from 250 mm to 450 mm, the width ranging from 6 mm to 10 mm, the density ranging from 0.6 g/cm³ to 1.2 g/cm³, and the power ranging from 10 W to 3,400 W; and
the heating film has the length ranging from 450 mm to 650 mm, the width ranging from 6 mm to 10 mm, the density ranging from 0.6 g/cm³ to 1.2 g/cm³, and the power ranging from 10 W to 7,000 W.

5. The heating film according to any one of claims 1 to 4, having a flake-like structure, wherein the natural graphite and the graphene are a flake-like structure, a flake-like extension plane of the heating film being substantially consistent with a flake-like extension plane of the natural graphite and/or a flake-like extension plane of the graphene.

6. The heating film according to any one of claims 1 to 5, having a heating temperature ranging from 500°C to 1,700°C.

7. The heating film according to any one of claims 1 to 6, wherein a material of the heating film is graphite.

8. The heating film according to any one of claims 1 to 7, comprising a plurality of heating units sequentially arranged in a length direction, wherein adjacent heating units are arranged at an interval from each other and connected through a connection segment.

9. The heating film according to claim 8, wherein each of the plurality of heating units has a hollow hole.

10. The heating film according to claim 8 or 9, having a first heating segment and a second heating segment that are adjacent to each other in the length direction, wherein:
the first heating segment comprises multiple connected heating units, and the second heating segment comprises multiple adjacent heating units, the multiple heating units corresponding to the first heating segment having a smaller size than the multiple heating units corresponding to the second heating segment; and/or
the first heating segment and the second heating segment are offset from each other in a width direction of the heating film.

11. The heating film according to any one of claims 8 to 10, having a plurality of notches arranged at an interval in the length direction.

12. The heating film according to claim 11, wherein each of the plurality of notches is defined through separating a part of the heating film from the remaining part of the heating film and then bending the part of the heating film.

13. A method for preparing a heating film according to any one of claims 1 to 12, the method comprising:
providing natural graphite, and performing an intercalation treatment on the natural graphite to obtain expandable graphite;
performing an expansion treatment on the expandable graphite to obtain expanded graphite; and
performing calendering, a first heat treatment, and cutting on the expanded graphite to obtain the heating film, or
the method comprising:
uniformly mixing and dispersing graphene and an additive to obtain a dispersion;
obtaining a dispersion film by coating the dispersion;
performing a second heat treatment on the dispersion film to obtain a preliminary carbon-based film; and
performing calendering and cutting on the preliminary carbon-based film to obtain the heating film.

14. The method according to claim 13, wherein:
conditions of the intercalation treatment are: performing intercalation on the natural graphite using concentrated sulfuric acid and/or hydrogen peroxide, to obtain the expandable graphite; and
conditions of the expansion treatment are: putting the expandable graphite into an expansion furnace, and expanding the expandable graphite at a temperature ranging from 850°C to 1,200°C, to obtain the expanded graphite.

15. A heating pipe, comprising a heating film according to any one of claims 1 to 12.

16. A heating appliance, comprising a heating pipe according to claim 15.

17. The heating appliance according to claim 16, wherein the heating appliance is an electric oven, a microwave oven, a combi steam oven, an electric kettle, an electric blanket, an electric warm air blower, an electric heater, a bath heater, an electric ceramic cooktop, or a disinfection cabinet.
